**Europäisches Patentamt**

**European Patent Office**

**Office européen des brevets**

(19)

(11) Veröffentlichungsnummer : **0 037 153**
**B1**

(12) **EUROPÄISCHE PATENTSCHRIFT**

(45) Veröffentlichungstag der Patentschrift :
23.05.84

(51) Int. Cl.³ : **A 47 J 47/18, B 65 D 25/32,
B 29 F 1/022**

(21) Anmeldenummer : **81200336.6**

(22) Anmeldetag : **26.03.81**

(54) **Kunststoffeimer mit angespritzten Tragbügeln.**

(30) Priorität : **29.03.80 NL 8001877**

(43) Veröffentlichungstag der Anmeldung :
**07.10.81 Patentblatt 81/40**

(45) Bekanntmachung des Hinweises auf die Patenterteilung : **23.05.84 Patentblatt 84/21**

(84) Benannte Vertragsstaaten :
**AT BE CH DE FR GB IT LI LU NL SE**

(56) Entgegenhaltungen :
**FR-A- 2 224 281
GB-A- 1 396 330**

(73) Patentinhaber : **CURVER B.V.
Spoorlaan Noord 92
NL-5121 WX Rijen (NL)**

(72) Erfinder : **Gorissen, Jan Theodoor
Proosdijstraat 15
NL-6191 AH Beek (L.) (NL)**

(74) Vertreter : **Hoogstraten, Willem Cornelis Roeland et al
OCTROOIBUREAU DSM Postbus 9
NL-6160 MA Geleen (NL)**

EP 0 037 153 B1

## Beschreibung

Die Erfindung betrifft einen Kunststoffeimer, der einen, aus einem einmalig nach aussen hin umgekrempten und einen einmalig nach unten hin umgekrempten Wandungsteil zusammengesetzten oberen Rand zum Anbringen eines diesen Rand untergreifenden Deckels aufweist und weiter einen integral mit dem Eimer verbundenen Tragbügel oder Henkel umfasst, der an den äusseren Enden an, sich ausserhalb des oberen Randes hinausragenden von diametral gegenüber einander auf der Aussenwand des Eimers angeordneten senkrechten Rippen befestigt ist, die an der Eimerseite sich bis an das nach aussen hin umgekrempte Wandteil erstreckende Ansatzstücke tragen, welche Rippen das Untergreifen des Oberrandes von einem Deckel zulassen, wobei der Tragbügel nach Herstellung des Eimers gelenkig an den Befestigungsstellen entlang von einer waagerechten Position in eine vertikale Gebrauchslage gebracht werden kann.

Ein solcher Eimer ist bekannt aus GB-A-1 396 330. Dieser Eimer kann nur unter Zuhilfenahme von komplizierten Formen hergestellt werden weil die Ansatzstücke, radial gesehen, raumlich von der Innenseite des nach unten hin umgekrempten Wandteils getrennt sind und weil die Oberseiten der ausserhalb des oberen Randes hinausragenden Rippen sich oberhalb der Unterseite des nach unten hin umgekrempten Wandteils befinden.

Aus NL-A-7208872 ist weiter ein Eimer mit angespritzten Tragbügel bekannt welcher ebenfalls nur mit einer komplizierten Form hergestellt werden kann.

Aufgabe der vorliegenden Erfindung ist nunmehr die Konstruktion eines Eimers von der obengenannten Ausführungsform der mit einfachen Matrizen herzustellen ist und deren Rippen fester an der Eimerwand befestigt sind.

Dies wird jetzt dadurch erreicht dass die Rippen sich, mittels Ansatzstücke an der Seite der Eimerwand, bis an die Innenwandungen der umgekrempten Wandungsteile erstrecken und darin übergehen und dass die Oberseiten der ausserhalb des oberen Randes hinausragenden Rippenteile sich ganz unter dem nach unten hin umgekrempten Wandungsteil befinden, waagerecht sind und sich in, unmittelbar unter dem nach unten hin umgekrempten Wandungsteil in den Rippen angeordneten Unterschneidungen, fortsetzen.

Statt mit einem einzigen Tragbügel (Henkel) kann der Eimer mit zwei halben Tragbügeln versehen werden, die von der anfangs waagerechten Lage aus in die vertikale Gebrauchslage unter Bildung eines einzigen Tragbügels zusammen gebracht werden. Die Tragbügelhälften können an den Enden zu beiden Seiten des Eimers nur an einem einzelnen Rippen befestigt sein. Es können aber auch zwei Rippenpaare vorgesehen sein, die diametral gegenüber einander an der Eimeraussenwand angebracht sind, wobei ein Rippenpaar nahe und zu beiden Seiten einer Symmetriefläche angeordnet ist. Die Bügelenden sind an zwei nicht zu einem Rippenpaar gehörenden Rippen befestigt. Auf diese Weise kann jedes Bügelende an einem gesonderten Rippen befestigt sein.

Zwischen den Rippen eines Rippenpaares kann an der Befestigungsstelle der Tragbügel ein die Rippen verbindender Brückenteil vorgesehen sein.

Die unter dem oberen Rand gebildete Unterschneidung kann derart bemessen werden, dass der den oberen Rand untergreifende Teil eines zum Eimer gehörigen Deckels genau darin Platz findet.

Die Dicke der Rippen wird zur Vermeidung von Unebenheiten an der Eimerinnenwand vorzugsweise so gewählt, dass sie der Wanddicke des Eimers gleichkommt oder kleiner ist. Dies ist vor allem von Bedeutung, falls ein Deckel mit versenktem mittleren Teil verwendet wird, dessen aufstehende Peripherieseiten eine Abdichtung mit der Innenwand des Eimers bilden sollen.

Ein Werkzeug zum Spritzgiessen eines erfindungsgemässen Eimers, das im wesentlichen aus einer Patrize und einer Matrize besteht, welche Teile in einer geraden Linie in- und voneinandergeschoben werden können, ist in den Figuren 6 und 7 dargestellt. Diese Werkzeuge sind zum Spritzgiessen einfacher und weniger komplizierter Behälter sehr üblich.

Das Werkzeug zeichnet sich dadurch aus, dass in der Matrize die Aussparungen für die Rippen und den (die) Tragbügel vorgesehen sind, wobei die Teilfläche des Werkzeugs im wesentlichen mit den oberen Seiten der Aussparungen für den (die) Tragbügel zusammenfällt und ausserhalb der Rippen nach innen zum Hohlraum im Werkzeug hinansteigt, der für den oberen Rand dient, während an Ort und Stelle eines Rippens über der Teilfläche des Werkzeugs in der Patrize ein Hohlraum angebracht ist, in den ein Schiebeteil hineinpasst, der in radialer Richtung beweglich ist und bei geschlossenem Werkzeug die Aussparung für den Rippen und einen Teil des für den oberen Rand vorgesehenen Hohlraums im Werkzeug abschliesst und es ferner Mittel zur Bewegung des Schiebeteils gibt. Diese Mittel können aus einem an der Matrize befestigten und schräg über der Teilfläche hinausragenden Stift bestehen, der bei geschlossenem Werkzeug genau passend und in Gleitbewegung in einer schräg verlaufenden Aussparung des Schiebeteils untergebracht wird und zwar so, dass beim Öffnen und Schliessen des Werkzeugs der Schiebeteil sich bzw. hinaus- und hineinbewegt.

Die Erfindung wird anhand eines in der Zeichnung dargestellten Ausführungsbeispiels erläutert.

Es zeigen:

Figur 1 eine Draufsicht eines erfindungsgemässen Eimers;

Figur 2 eine Seitenansicht des Eimers mit vertikal angeordneten Tragbügeln oder Henkeln ;

Figur 3 eine vergrösserte Detailzeichnung einer Seitenansicht des Eimers an Ort und Stelle eines Rippens gemäss Pfeil III in Fig. 1 ;

Figur 4 einen Teilschnitt gemäss der Linie IV-IV von Fig. 1 ;

Figur 5 einen Schnitt gemäss der Linie V-V von Fig. 1 ;

Figur 6 einen Schnitt eines geschlossenen Werkzeugs an einer ausserhalb eines Rippens gelegenen Stelle ;

Figur 7 einen Schnitt eines geschlossenen Werkzeugs dort wo sich ein Rippen befindet.

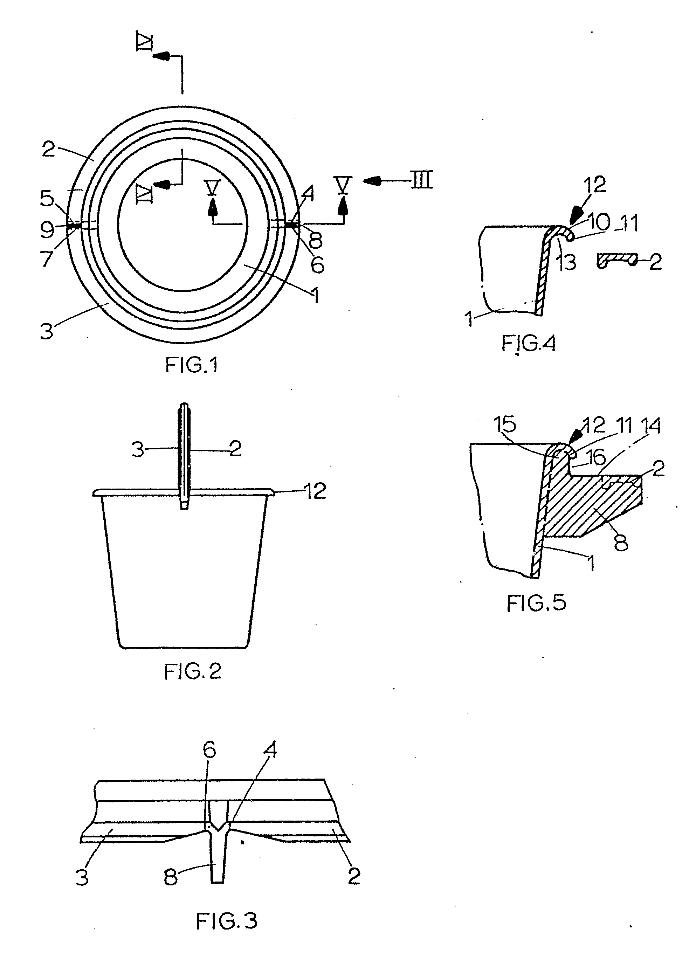

Fig. 1 stellt die Draufsicht eines Eimers 1 dar, dessen zwei Bügelhälften 2 und 3 sich diametral gegenüber einander in waagerechter Position befinden, wobei die Enden 4, 5 und 6, 7 an den vertikal auf der Eimerwand angebrachten einander diametral gegenüberliegenden Rippen 8 und 9 befestigt sind. Diese Befestigungsstelle ist in Fig. 3 in vergrössertem Massstab dargestellt.

In der Figur 2 sind die Tragbügelhälften 2 und 3 in der vertikalen Gebrauchsposition hochgeklappt und bilden auf diese Weise einen Henkel oder Tragbügel.

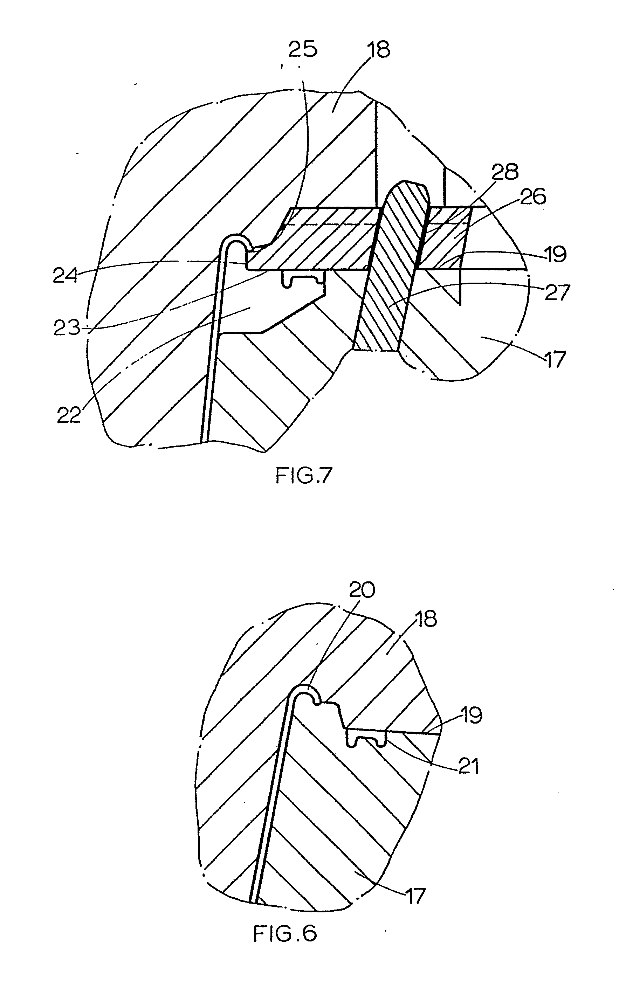

Der Eimer 1 hat, wie in den Figuren 4 und 5 zu sehen ist, einen einmalig nach aussen hin gekrempten Wandungsteil 10 und einen einmalig nach unten hin gekrempten Wandungsteil 11. Diese Wandteile 10 und 11 bilden gemeinsam einen nach aussen gerichteten oberen Rand 12 mit einer an der unteren Seite nach unten hin geöffneten Rinne 13. Der Bügel 2 ist in Fig. 5 gestrichelt angegeben. Aus dieser Figur 3 ergibt sich, dass die Bügelhälften an den waagerechten oberen Seiten 14 der Rippen 8 befestigt sind.

Die Rippen 8 ragen ausserhalb des oberen Randes 12 hinaus und die waagerechten oberen Seiten dieser Rippen liegen in einiger Entfernung unter dem oberen Rand 12.

Eimerseitig sind die Rippen 8 nach oben hin mit einem Ansatzstück 15 bis an den oberen Rand 12 verlängert. Dieses Ansatzstück liegt völlig innerhalb der senkrechten Projizierung der Aussenperipherie des oberen Randes, so dass zwischen diesem oberen Rand und der oberen Seite 14 eine Unterschneidung 16 entsteht. Weil der Rippen 8 sowohl am Eimer als am oberen Rand 12 befestigt ist, ist die Verformbarkeit dieses Rippens geringer als wenn der Rippen nur an der Eimerwand befestigt wäre.

In Fig. 5 ist zu sehen, dass die radiale Tiefe dieser Unterschneidung der Wanddicke des nach innen umgekrempten Wandungsteils 11 entspricht. Auf diese Weise kann ein zum Eimer gehörender Deckel den Rand völlig untergreifen.

Ein Teil der Matrize zum Spritzgiessen eines erfindungsgemässen Eimers ist in den Figuren 6 und 7 dargestellt. In Fig. 6 ist mit 17 die Matrize und mit 18 die Patrize bezeichnet. Die im wesentlichen horizontale und durch die Linie 19 bezeichnete Teilfläche verläuft nach innen hin schräg aufwärts bis an den Hohlraum 20, der für den oberen Rand 12 des Eimers vorgesehen ist. In der Matrize befindet sich der Hohlraum 21 für den Tragbügel.

Fig. 7 zeigt im Schnitt das Spritzgusswerkzeug an der Stelle, wo ein Rippen gebildet wird. Die Teilfläche ist auch hier mit 19 bezeichnet. In der Matrize 17 ist die für den Rippen vorgesehene Aussparung mit 22 bezeichnet. Die in der Teilfläche mündenden Aussparungen, sowie die Öffnungen 24 der Rippenaussparungen und die Öffnungen 25 der unteren Seite des Hohlraums für den nach unten hin umgekrempten Teil 11 der Eimerwand werden, wie in der Figur 7 angegeben, durch einen Schiebeteil 26 abgeschlossen, der radial bewegbar in einer Aussparung der Patrize angeordnet ist.

Ein an der Matrize befestigter Stift 27, der an der Teilfläche 19 entlang schräg hinausragt und in einer für den Schiebeteil 26 vorgesehenen Öffnung 28 untergebracht ist, sorgt dafür, dass beim Öffnen des Werkzeugs, wobei sich die Matrize von der Patrize abhebt, der Schiebeteil 26 nach rechts verschoben wird, so dass anschliessend der Eimer von der Patrize gelöst werden kann.

**Ansprüche**

1. Kunststoffeimer, der einen, aus einem einmalig nach aussen hin umgekrempten und einen einmalig nach unten hin umgekrempten Wandungsteil (11) zusammengesetzten oberen Rand (12) zum Anbringen eines diesen Rand untergreifenden Deckels aufweist und weiter einen integral mit dem Eimer verbundenen Tragbügel oder Henkel (2, 3) umfasst, der an den äusseren Enden an, sich ausserhalb des oberen Randes (12) hinausragenden von diametral gegenüber einander auf der Aussenwand des Eimers angeordneten senkrechten Rippen (8, 9) befestigt ist, die an der Eimerseite sich bis an das nach aussen hin umgekrempte Wandteil (11) erstreckende Ansatzstücke (15) tragen, welche Rippen (8, 9) das Untergreifen des Oberrandes von einem Deckel zulassen, wobei der Tragbügel (2, 3) nach Herstellung des Eimers gelenkig an den Befestigungsstellen entlang von einer waagerechten Position in eine vertikale Gebrauchslage gebracht werden kann, dadurch gekennzeichnet, dass die Rippen (8, 9) sich, mittels Ansatzstücke (15) an der Seite der Eimerwand, bis an die Innenwandungen der umgekrempten Wandungsteile (11) erstrecken und darin übergehen und dass die Oberseiten der ausserhalb des oberen Randes hinausragenden Rippenteile sich ganz unter dem nach unten hin umgekrempten Wandungsteil (11) befinden, waagerecht sind und sich in, unmittelbar unter dem nach unten hin umgekrempten Wandungsteil (11), in den Rippen (8, 9) angeordneten Unterschneidungen (16), fortsetzen.

2. Kunststoffeimer gemäss Anspruch 1, dadurch gekennzeichnet, dass die Unterschneidungen (16) nicht tiefer sind als die Dicke des nach unten hin umgekrempten Wandungsteils (11).

3. Kunststoffeimer gemäss Anspruch 1 oder 2, dadurch gekennzeichnet dass der Eimer zwei Tragbügelhälften (2, 3) aufweist und dass zwei Rippenpaare diametral gegenüber einander and der Aussenwand des Eimers angebracht sind, wobei jeweils ein Rippenpaar nahe und zu beiden Seiten einer Symmetriefläche angeordnet ist und wobei die Enden der Bügelhälften (2, 3) an zwei nicht zu einem Rippenpaar gehörigen Rippen befestigt sind.

4. Kunststoffeimer gemäss Anspruch 3, dadurch gekennzeichnet, dass zwischen den Rippen eines Rippenpaars an der Stelle wo die Enden der Tragbügelhälften (2, 3) befestigt sind, ein die Rippen verbindender Brückenteil vorgesehen ist.

## Claims

1. Plastics bucket having an upper edge (12) consisting of a wall portion curving outwards and a wall portion curving downwards (11) so that a lid gripping under this edge can be placed on it, and having a handle (2, 3) that is integral with the bucket and the ends of which are attached to vertical lugs (8, 9) arranged in diametrical opposition on the outside of the bucket and projecting outside the upper edge (12), which lugs (8, 9) have extensions (15) reaching up to the outward curve (11) of the bucket wall and allowing a lid to grip under the upper edge, with the handle (2, 3), after the bucket has been produced, being capable of being hingingly moved along the attachment points from a horizontal into a vertical, operative, position, this bucket being characterized in that extensions (15) of the lugs (8, 9) on the outside of the bucket reach up to the inner face of the curved portion of the bucket wall (11), merging into this, and in that the lug sections projecting outside the upper edge have their tops at a distance below the downward-curving portion of the bucket wall (11), are horizontally disposed, and are integral with recessed sections (16) that project inwards immediately below the downward-curving portion of the bucket wall (11).

2. Plastics bucket according to claim 1, characterized in that the recessed sections (16) do not project inwards beyond the thickness of the downward-curving portion of the bucket wall (11).

3. Plastics bucket according to claim 1 or 2, characterized in that the bucket is provided with two handle halves (2, 3), and in that two pairs of lugs are arranged in diametrical opposition on the outside of the bucket, with each pair of lugs being located close to and on either side of a plane of symmetry, and the ends of the handle halves (2, 3) being attached to two lugs not belonging to one pair.

4. Plastics bucket according to claim 3, characterized in that between lugs forming one pair, at the location where the ends of the handle halves (2, 3) are attached, there is provided a bridge element connecting these lugs.

## Revendications

1. Seau en matière plastique présentant un bord supérieur (12) composé d'une partie de paroi retroussée une fois vers l'extérieur et d'une partie de paroi retroussée une fois vers le bas (11) pour poser un couvercle s'ajustant par en dessus à ce bord, et comprenant en outre une anse ou poignée (2, 3) intégralement liée au seau, qui est fixée aux extrémités extérieures, en faisant saillie en dehors du bord supérieur (12), de nervures verticales (8, 9) disposées de manière diamétralement opposée l'une à l'autre à la paroi externe du seau, qui portent du côté du seau des pièces ajoutées (15) s'étendant jusqu'à la partie de paroi retroussée vers l'extérieur (11), lesquelles nervures permettent la prise par le haut du bord supérieur d'un couvercle, l'anse (2, 3) pouvant après la fabrication du seau être amenée de manière articulée aux endroits de fixation le long d'une position horizontale en une position d'utilisation verticale, caractérisé en ce que les nervures (8, 9) s'étendent, au moyen de pièces ajoutées (15) sur le côté de la paroi du seau, jusqu'aux parois internes des parties de paroi retroussées (11) et y passent et en ce que les côtés supérieurs des parties de nervures s'élevant à l'extérieur du bord supérieur se trouvent entièrement en dessous de la partie de paroi retroussée vers le bas (11), sont horizontaux et se poursuivent, immédiatement sous la partie de paroi retroussée vers le bas (11), dans les parties écrénées (16) disposées dans les nervures (8, 9).

2. Seau en matière plastique selon la revendication 1, caractérisé en ce que les parties écrénées (16) ne sont pas plus profondes que l'épaisseur de la partie de paroi retroussée vers le bas (11).

3. Seau en matière plastique selon l'une des revendications 1 ou 2, caractérisé en ce que le seau présente deux demi-anses (2, 3) et en ce que deux paires de nervures sont disposées de façon diamétralement opposée l'une à l'autre à la paroi externe du seau, une des paires de nervures respectives étant disposée à proximité et des deux côtés d'une surface de symétrie, et où les extrémités des demi-anses (2, 3) sont fixées sur deux nervures n'appartenant pas à une paire de nervures.

4. Seau en matière plastique selon la revendication 3, caractérisé en ce qu'entre les nervures d'une paire de nervures à l'endroit où sont fixées les extrémités des demi-anses (2, 3) est prévue une pièce de liaison reliant les nervures.

FIG.1

FIG.4

FIG.2

FIG.5

FIG.3

1

FIG.7

FIG.6